# EUROPEAN PATENT SPECIFICATION

(11) **EP 4 606 515 B1**
(45) Date of publication and mention of the grant of the patent: **25.11.2026**
(21) Application number: 25158335.7
(22) Date of filing: 17.02.2025
(51) Int. Cl.: B23Q 1/00, B23Q 1/70

(54) **ELECTROSPINDLE**
ELEKTROSPINDEL
ELECTROBROCHE

(30) Priority: 20.02.2024 IT 202400003565
(43) Date of publication of application: 27.08.2025
(73) Proprietor: HSD S.p.A., 61100 Pesaro (PU) (IT)
(72) Inventor: GALLI, Paolo Giuseppe Fulvio, 61100 PESARO (PU) (IT); BENEDETTINI, Stefano, 61100 PESARO (PU) (IT); FRATESI, Marco, 61100 PESARO (PU) (IT); DRUDI, Gianluca Paolo, 61100 PESARO (PU) (IT)
(74) Representative: Studio Torta S.p.A.

(56) References cited:
- CN-A- 109 500 411
- CN-A- 112 997 124

## Description

### TECHNICAL FIELD

The present invention relates to an electrospindle.

### BACKGROUND

In particular, the present invention relates to an electrospindle of the type comprising a containing casing; a tubular flange; an electric motor having a stator mounted in the containing casing and a rotor, which is coupled in a rotating manner with the tubular flange, by means of the interposition of a plurality of roller bearings, and defines a tool-holder spindle.

The electrospindle further comprises a coupling device to lock a tool onto the tool-holder spindle; a first assembly comprising the containing casing and the stator; a second assembly comprising the tubular flange, the rotor, the roller bearings, and the coupling device; and a plurality of attachment screws to lock the first assembly and the second assembly to one another in a releasable manner.

The electrospindle further comprises an electronic control unit installed in the first assembly; a plurality of sensors installed in the second assembly; and a connection system to supply electric current and/or to transmit signals between the electronic control unit and the sensors.

The connection system comprises a plurality of wiring means to connect the electronic control unit and the sensors to one another.

For example, an electrospindle in which the sensors are located on a first assembly is known from Patent Document CN 109 500 411 A.

The electrospindles of the known type described above have several drawbacks, mainly deriving from the fact that maintenance and/or replacement of the rotor, the roller bearings, the coupling device and/or the sensors require, in the first place, decoupling between the two assemblies and disconnection of the wiring means and, subsequently, a new coupling between the two assemblies and a new connection of the wiring means.

Consequently, the maintenance and/or replacement operations described above result in relatively lengthy and complex manual wiring operations between the electronic control unit and the sensors and the risk of incorrect connections of the sensors with the electronic control unit.

### TABLE OF CONTENTS

The object of the present invention is to provide an electrospindle that is free from the drawbacks described here above and that is simple and economical to manufacture. According to the present invention, there is provided an electrospindle as claimed in the appended claims.

### BRIEF DESCRIPTION OF THE DRAWINGS

The present invention will now be described with reference to the appended drawings, which show a non-limiting embodiment thereof, wherein:
Figure 1 is a schematic side view, with parts removed for clarity, of a preferred embodiment of the electrospindle according to the present invention;
Figure 2 is an exploded schematic side view, with parts removed for clarity, of the electrospindle of Figure 1; and
Figure 3 is a schematic side view, with parts removed for clarity, of a variant of the electrospindle of Figures 1 and

### DESCRIPTION OF EMBODIMENTS

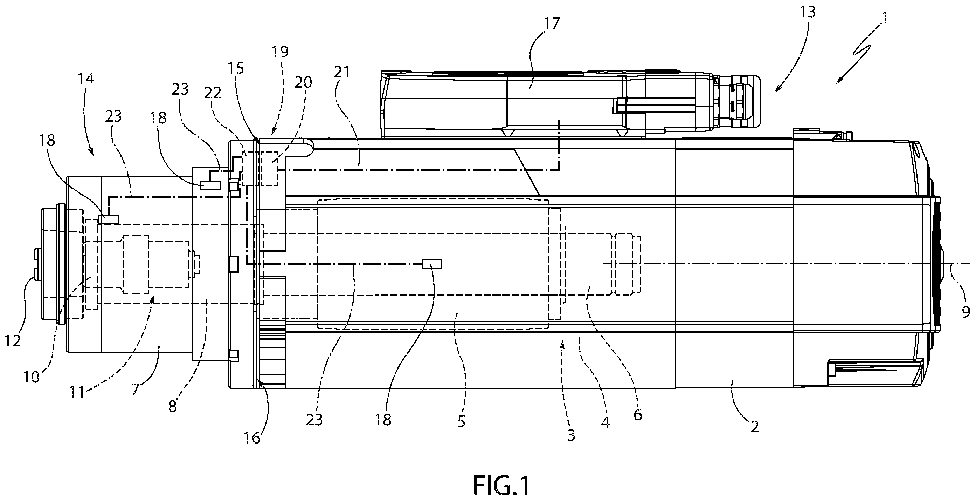

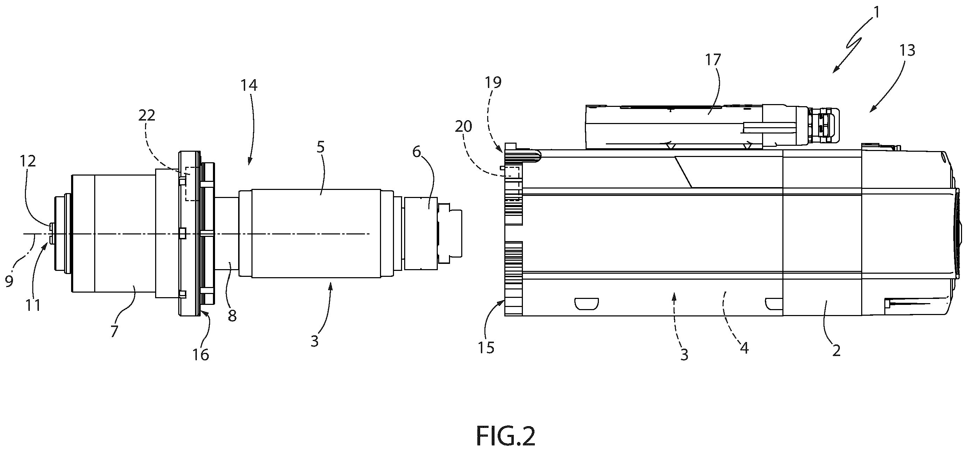

With reference to Figures 1 and 2, the number 1 indicates, in its entirety, an electrospindle comprising an outer containing casing 2 housing inside it an electric motor 3, which comprises, in turn, a stator 4 fixed inside the casing 2 and a rotor 5 coupled to the stator 4 and provided with a tubular output shaft 6.

The shaft 6 extends through an outer tubular flange 7 fixed axially to an open end of the casing 2, and has a free end defining a tool-holder spindle 8 rotating, with respect to the flange 7 and by means of the interposition of roller bearings known and not shown, around a longitudinal axis 9 thereof.

The spindle 8 has a housing 10 adapted to receive and to centre a tool/tool-holder known and not shown.

The tool/tool-holder (not shown) is locked axially onto the spindle 8 by means of a coupling unit 11 comprising a gripping member 12 configured to grip the tool/tool-holder (not shown) and a drive (not shown) adapted to shift the gripping member 12 between a locking position of the tool/tool-holder (not shown) on the spindle 8 and a releasing position.

The electrospindle 1 therefore comprises a first assembly 13 comprising the casing 2 and the stator 4 and a second assembly 14 comprising the rotor 5, the shaft 6, the flange 7, the coupling unit 11, and the aforesaid roller bearings (not shown).

The two assemblies 13, 14 are arranged in contact with one another at the respective end faces 15, 16 of the casing 2 and the flange 7 substantially perpendicular to the axis 9, and are axially locked to one another in a releasable manner by means of a plurality of tightening screws (not shown).

The electrospindle 1 further comprises an electronic control unit 17 mounted on the casing 2 and therefore installed on the assembly 13, and a plurality of sensors 18 installed on the assembly 14 to detect the operating conditions of the electrospindle 1 itself.

The sensors 18 comprise, for example, sensors to detect wear of the aforementioned roller bearings (not shown), sensors to detect the presence of processing shavings and/or off-cuts, sensors to detect the temperature of the shaft 6, sensors to detect the traction force of the coupling unit 11, sensors to detect the presence of the tool (not shown) in the spindle **8.**

The electrospindle 1 further comprises a connection system 19 to supply electric current and/or to transmit signals between the unit 17 and the sensors 18.

The system 19 has a first connection device 20 for power supply and/or communication mounted on the face 15 of the assembly 13 and connected with the unit 17 by means of at least one wiring means 21 and a second connection device 22 for power supply and/or communication mounted on the face 16 of the assembly 14 and connected with the sensors 18 by means of respective wiring means 23.

The two connection devices 20, 22 are configured to be mechanically coupled to one another through contact or to be coupled to one another without contact, for example connection devices with means of communication of the electromagnetic type.

The electrospindle 1 has several advantages deriving mainly from the fact that maintenance and/or replacement of the rotor 5, the roller bearings (not shown), the coupling unit 11 and/or the sensors 18 require solely the decoupling of the two assemblies 13, 14 and of the two connection devices 20, 22 and subsequently a new coupling of the two assemblies 13, 14 and of the two connection devices 20, 22.

In other words, the maintenance and/or replacement interventions mentioned above do not require any operation of disconnection/connection of the wiring means 21, 23 and are therefore relatively simple and rapid.

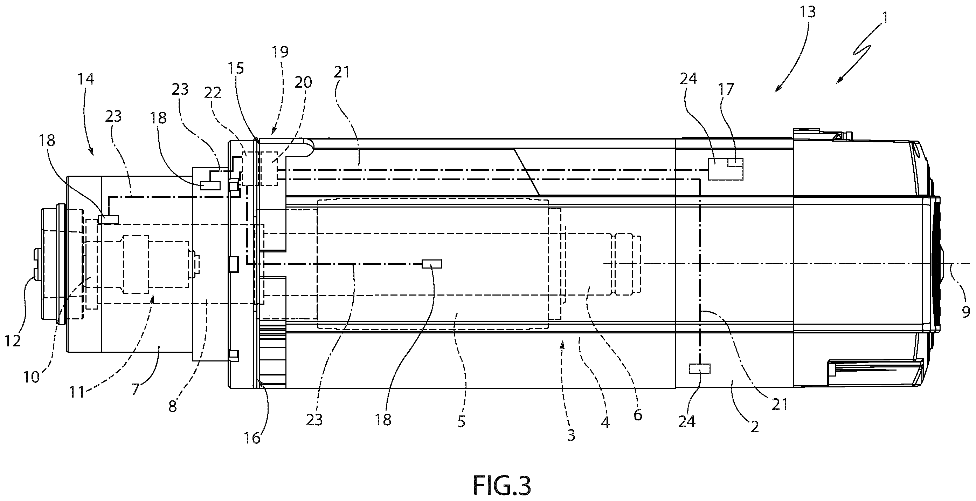

The variant in Figure 3 differs from what is shown in the preceding figures solely in the fact that, on it:
the electrospindle 1 comprises a plurality of sensors 24 installed on the assembly 13 to detect the operating conditions of the electrospindle 1 and connected with the connection device 20 by means of relative wiring means 21; and
the electronic control unit 17 is removed from the casing 2 and integrated into at least one sensor 24.

According to a variant not shown, the electronic control unit 17 of the electrospindle 1 is separate from the casing 2 and is installed externally to the electrospindle 1, for example in an electric panel of a machine tool (not shown), and connected with the connection device 20 by means of the wiring means 21.

## Claims

1. An electrospindle comprising a containing casing (2); a tubular flange (7); an electric motor (3) having a stator (4) mounted in the containing casing (2) and a rotor (5) mounted in the tubular flange (7) and defining a tool-holder spindle (8); a coupling unit (11) to lock a tool on the tool-holder spindle (8); a first assembly (13) comprising the containing casing (2) and the stator (4); a second assembly (14) comprising the tubular flange (7), the rotor (5) and the coupling unit (11); fixing means to lock said first and second assembly (13, 14) to one another in a releasable manner; an electronic control unit (17) to control the operation of the electrospindle; a plurality of sensors (18) installed in the second assembly (14); and a connection system (19) to supply electric current and/or transmit signals between the electronic control unit (17) and the sensors (18); and **characterized in that** the connection system (19) comprises a first connection device (20) for power supply and/or communication, which is mounted on the first assembly (13) and is connected to the electronic control unit (17), and a second connection device (22) for power supply and/or communication, which is mounted on the second assembly (14) and is connected to the sensors (18); said first and second connection devices (20, 22) being configured to be coupled with each other.

2. The electrospindle according to claim 1, wherein said first and second connection device (20, 22) are configured to be mechanically coupled to one another through contact.

3. The electrospindle according to claim 1, wherein said first and second connection device (20, 22) are configured to be coupled to one another without contact.

4. The electrospindle according to any one of the preceding claims, wherein the connection system (19) further comprises first wiring means (21) to connect the electronic control unit (17) and the first connection device (20) to one another and second wiring means (23) to connect the sensors (18) and the second connection device (22) to one another.

5. The electrospindle according to claim 4, wherein the first wiring means (21) are mounted on the first assembly (13) and the second wiring means (23) are mounted on the second assembly (14).

6. The electrospindle according to any one of the preceding claims, wherein the containing casing (2) and the tubular flange (7) are axially delimited by respective end faces (15, 16) facing one another; said first and second connection device (20, 22) being each mounted on a relative end face (15, 16).

7. The electrospindle according to any one of the preceding claims, wherein the electronic control unit (17) is installed on the containing casing (2).

8. The electrospindle according to any one of the claims from 1 to 6 and further comprising at least one further sensor (24) installed on the first assembly (13) and connected to the first connection device (20); the electronic control unit (17) being integrated in said further sensor (24).

9. The electrospindle according to any one of the claims from 1 to 6, wherein the electronic control unit (17) is separate from the containing casing (2).

## Patentansprüche

1. Elektrospindel, umfassend: ein Fassungsgehäuse (2); einen rohrförmigen Flansch (7); einen Elektromotor (3), aufweisend einen Stator (4), der in dem Fassungsgehäuse (2) montiert ist, und einen Rotor (5), der in dem rohrförmigen Flansch (7) montiert ist und eine Werkzeughalterspindel (8) definiert; eine Kupplungseinheit (11) zum Festspannen eines Werkzeugs an der Werkzeughalterspindel (8); eine erste Baugruppe (13), umfassend das Fassungsgehäuse (2) und den Stator (4); eine zweite Baugruppe (14), umfassend den rohrförmigen Flansch (7), den Rotor (5) und die Kupplungseinheit (11); Befestigungsmittel zum Festspannen der ersten und zweiten Baugruppe (13, 14) aneinander auf eine lösbare Weise; eine elektronische Steuereinheit (17) zum Steuern des Betriebs der Elektrospindel; eine Vielzahl von Sensoren (18), die in der zweiten Baugruppe (14) installiert sind, und ein Verbindungssystem (19) zum Versorgen mit elektrischem Strom und/oder Übertragen von Signalen zwischen der elektronischen Steuereinheit (17) und den Sensoren (18), und **dadurch gekennzeichnet, dass** das Verbindungssystem (19) eine erste Verbindungsvorrichtung (20) für Stromversorgung und/oder Kommunikation, die an der ersten Baugruppe (13) montiert ist und mit der elektronischen Steuereinheit (17) verbunden ist, und eine zweite Verbindungsvorrichtung (22) für Stromversorgung und/oder Kommunikation umfasst, die an der zweiten Baugruppe (14) montiert und mit den Sensoren (18) verbunden ist, wobei die erste und zweite Verbindungsvorrichtung (20, 22) ausgelegt sind, um miteinander gekuppelt zu werden.

2. Elektrospindel nach Anspruch 1, wobei die erste und zweite Verbindungsvorrichtung (20, 22) ausgelegt sind, um per Kontakt mechanisch miteinander gekuppelt zu werden.

3. Elektrospindel nach Anspruch 1, wobei die erste und zweite Verbindungsvorrichtung (20, 22) ausgelegt sind, um ohne Kontakt miteinander gekuppelt zu werden.

4. Elektrospindel nach einem der vorhergehenden Ansprüche, wobei das Verbindungssystem (19) ferner erste Verdrahtungsmittel (21) zum Verbinden der elektronischen Steuereinheit (17) und der ersten Verbindungsvorrichtung (20) miteinander sowie zweite Verdrahtungsmittel (23) zum Verbinden der Sensoren (18) und der zweiten Verbindungsvorrichtung (22) miteinander umfasst.

5. Elektrospindel nach Anspruch 4, wobei die ersten Verdrahtungsmittel (21) an der ersten Baugruppe (13) montiert sind und die zweiten Verdrahtungsmittel (23) an der zweiten Baugruppe (14) montiert sind.

6. Elektrospindel nach einem der vorhergehenden Ansprüche, wobei das Fassungsgehäuse (2) und der rohrförmige Flansch (7) axial durch jeweilige Endflächen (15, 16), die einander zugewandt sind, begrenzt sind, wobei die erste und zweite Verbindungsvorrichtung (20, 22) jeweils an einer jeweiligen Endfläche (15, 16) montiert sind.

7. Elektrospindel nach einem der vorhergehenden Ansprüche, wobei die elektronische Steuereinheit (17) an dem Fassungsgehäuse (2) installiert ist.

8. Elektrospindel nach einem der Ansprüche 1 bis 6, ferner umfassend mindestens einen weiteren Sensor (24), der an der ersten Baugruppe (13) installiert und mit der ersten Verbindungsvorrichtung (20) verbunden ist, wobei die elektronische Steuereinheit (17) in den weiteren Sensor (24) integriert ist.

9. Elektrospindel nach einem der Ansprüche 1 bis 6, wobei die elektronische Steuereinheit (17) von dem Fassungsgehäuse (2) getrennt ist.

## Revendications

1. Électrobroche comprenant un carter de logement (2) ; une bride tubulaire (7) ; un moteur électrique (3) comportant un stator (4) monté dans le carter de logement (2) et un rotor (5) monté dans la bride tubulaire (7) et définissant une broche porte-outil (8) ; une unité de couplage (11) pour verrouiller un outil sur la broche porte-outil (8) ; un premier ensemble (13) comprenant le carter de logement (2) et le stator (4) ; un second ensemble (14) comprenant la bride tubulaire (7), le rotor (5) et l'unité de couplage (11) ; des moyens de fixation pour verrouiller lesdits premier et second ensembles (13, 14) entre eux d'une manière libérable ; une unité de commande électronique (17) pour commander le fonctionnement de l'électrobroche ; une pluralité de capteurs (18) installés dans le second ensemble (14) ; et un système de connexion (19) pour alimenter en courant électrique et/ou transmettre des signaux entre l'unité de commande électronique (17) et les capteurs (18) ; et **caractérisée en ce que** le système de connexion (19) comprend un premier dispositif de connexion (20) pour une alimentation en énergie et/ou une communication, qui est monté sur le premier ensemble (13) et est connecté à l'unité de commande électronique (17), et un second dispositif de connexion (22) pour une alimentation en énergie et/ou une communication, qui est monté sur le second ensemble (14) et est connecté aux capteurs (18) ; lesdits premier et second dispositifs de connexion (20, 22) étant configurés pour être couplés l'un à l'autre.

2. Électrobroche selon la revendication 1, dans laquelle lesdits premier et second dispositifs de connexion (20, 22) sont configurés pour être mécaniquement couplés entre eux par contact.

3. Électrobroche selon la revendication 1, dans laquelle lesdits premier et second dispositifs de connexion (20, 22) sont configurés pour être couplés entre eux sans contact.

4. Électrobroche selon l'une quelconque des revendications précédentes, dans laquelle le système de connexion (19) comprend en outre des premiers moyens de câblage (21) pour connecter entre eux l'unité de commande électronique (17) et le premier dispositif de connexion (20) et des seconds moyens de câblage (23) pour connecter entre eux les capteurs (18) et le second dispositif de connexion (22).

5. Électrobroche selon la revendication 4, dans laquelle les premiers moyens de câblage (21) sont montés sur le premier ensemble (13) et les seconds moyens de câblage (23) sont montés sur le second ensemble (14).

6. Électrobroche selon l'une quelconque des revendications précédentes, dans laquelle le carter de logement (2) et la bride tubulaire (7) sont axialement délimités par des faces d'extrémité (15, 16) respectives se faisant face ; lesdits premier et second dispositifs de connexion (20, 22), chacun étant monté sur une face d'extrémité (15, 16) associée.

7. Électrobroche selon l'une quelconque des revendications précédentes, dans laquelle l'unité de commande électronique (17) est installée sur le carter de logement (2).

8. Électrobroche selon l'une quelconque des revendications 1 à 6 et comprenant en outre au moins un capteur supplémentaire (24) installé sur le premier ensemble (13) et connecté au premier dispositif de connexion (20) ; l'unité de commande électronique (17) étant intégrée dans ledit capteur supplémentaire (24).

9. Électrobroche selon l'une quelconque des revendications 1 à 6, dans laquelle l'unité de commande électronique (17) est séparée du carter de logement (2).
